# EUROPÄISCHE PATENTANMELDUNG

(11) **EP 1 006 375 A1**
(43) Veröffentlichungstag der Anmeldung: **07.06.2000**
(21) Anmeldenummer: 99123370.1
(22) Anmeldetag: 23.11.1999
(51) Int. Cl.: G02B 5/32, G02B 27/01, G03H 1/04, G03H 1/08, G03B 21/56, G09B 9/32, B60K 37/00

(54) **Holographisches Anzeige-System zur Darstellung von Informationen mit einem holographischen Zwischenbildschirm und Verfahren zur Herstellung des holographischen Zwischenbildschirms**

(30) Priorität: 17.06.1999 DE 19927712; 02.12.1998 DE 19855664
(71) Anmelder: HSM Holographic Systems München GmbH, 85652 Ottersberg (DE)
(72) Erfinder: Dausmann, Günther, 85435 Erding (DE); Hochenbleicher, Gerhard, 82256 Fürstenfeldbruck (DE); Gabler, Werner, 80469 München (DE); Yang, Zishao, 85435 Erding (DE)
(74) Vertreter: Gossel, Hans K., Dipl.-Ing.

(57) **Zusammenfassung**

Es wird ein holographisches Display-System zur Darstellung von Information vorgestellt, das ein Laserprojektionssystem, einen holographischen Zwischenbildschirm sowie ein Displayelement umfaßt. Das Laserprojektionssystem erzeugt mindestens einen Laserstrahl, dem die darzustellende Information aufgeprägt ist. Diese Information wird auf einen holographischen Zwischenbildschirm projiziert, der als Mattscheibe wirkt, aber eine Richtcharakteristik aufweist, denn das aufprojizierte Bild wird nur in einen definierten Raumwinkelbereich gestreut. Mittels eines Displayelements, welches entweder ein Holographisch-Optisches Element, ein Spiegel oder eine Lupe sein kann, wird ein virtuelles Bild des holographischen Zwischenbildschirms sowie der darauf projizierten Information erzeugt. Einem Betrachter erscheint dieses virtuelle Bild als in die Tiefe verlagert, und deshalb kann er es wahrnehmen, ohne seine Augen auf den Nahbereich zu akkommodieren. Die Erfindung eignet sich insbesondere dazu, konventionelle Anzeigeelemente im Armaturenbereich von Fahrzeugen, Flugzeugen etc. zu ersetzen. In dem holographischen Zwischenbildschirm sind das reelle Bild einer flächig beleuchteten Mattscheibe sowie der zugehörige Lichtkegel durch ein holographisches Verfahren oder durch Computer-Simulation aufgezeichnet.

## Beschreibung

Die Erfindung betrifft ein holografisches Display-System sowie ein Verfahren zur Darstellung von Information, welches insbesondere für den Einsatz im Armaturenbereich von Kraftfahrzeugen, Flugzeugen etc. geeignet ist.

Bei herkömmlichen Anzeigeelementen im Armaturenbereich besteht das Problem, daß der Fahrer, um das Anzeigeelement ablesen zu können, seine Augen vom Fernbereich auf den Nahbereich umstellen muß. Während des Ablesens der Anzeigeelemente kann er das Verkehrsgeschehen durch die Windschutzscheibe nur verschwommen wahrnehmen, weil seine Augen auf den Nahbereich akkommodiert sind. Es vergehen einige Sekundenbruchteile, bis das Auge wieder an den Fernbereich angepaßt ist. Für eine permanente Überwachung der Anzeigeelemente auf dem Armaturenbrett ist es erforderlich, die Augen in regelmäßigen Abständen auf den Nahbereich und anschließend wieder auf den Fernbereich einzustellen. Der ständige Wechsel zwischen Nah- und Fernbereich senkt die Aufmerksamkeit des Fahrers für das Verkehrsgeschehens und führt zu Ermüdung.

Es wäre daher wünschenswert, dem Fahrer ein Display anbieten zu können, welches von ihm bequem mit auf den Fernbereich akkommodierten Augen abgelesen werden kann. Wäre es möglich, dem Fahrer die benötigten Informationen auf diese Weise anzubieten, so könnte er den Blick von der Windschutzscheibe in Richtung Armaturenbereich senken und die Informationen erfassen, ohne sein Auge auf die Nähe umstellen zu müssen.

Es sind bereits verschiedene Vorschläge gemacht worden, basierend auf holografischen Techniken ein derartiges Display zu realisieren. Es wurde beispielsweise vorgeschlagen, einen holografischen Projektionschirm zu verwenden, auf dem eine weit außerhalb der Hologrammebene befindliche Projektionsfläche holografisch aufgezeichnet wurde. Der Betrachter des Hologramms erkennt das virtuelle Bild der Projektionsfläche in weitem Abstand, wenn er das in der Nähe befindliche Hobgramm betrachtet. Es wurde nun vorgeschlagen, ein Laserprojektionssystem zu verwenden, um die darzustellende Information auf die im Hologramm sichtbare Projektionsfläche zu projizieren. Insbesondere wurde vorgeschlagen, das Projektions-System dabei auf die Ebene der im Hologramm sichtbaren Projektionsfläche zu fokussieren.

Es ist nun aber gerade nicht möglich, das im Hologramm erkennbare virtuelle Bild der Projektionsfläche seinerseits als Projektionsfläche zu verwenden. Es ist nicht möglich, die darzustellende Information auf das virtuelle Bild der Projektionsfläche, wie es im Hologramm erkennbar ist, zu projizieren. Die bisher gemachten Lösungsvorschläge sind daher nicht praktikabel, es mangelt ihnen an der technischen Durchführbarkeit.

Aufgabe der Erfindung ist es daher, ein Display-System sowie ein Verfahren zur Darstellung von Information zur Verfügung zu stellen, durch das die projizierte Information für einen Betrachter lichtstark, kontrastreich und hinreichend weit entfernt erscheint, so daß er sie ohne Akkommodation der Augen auf den Nahbereich bequem erfassen kann.

Die Aufgabe der Erfindung wird durch ein holografisches Display-System zur Darstellung von Information gemäß Anspruch 1, durch ein Verfahren zur Darstellung von Information gemäß Anspruch 16, sowie durch ein Verfahren zur Herstellung eines holografischen Zwischenbildschirms gemäß Anspruch 31 bzw. 34 gelöst.

Das erfindungsgemäße Display-System weist ein Laserprojektionssystem auf, durch das mindestens ein Laserstrahl erzeugbar ist, dem die darzustellende Information aufgeprägt ist. Der erzeugte Laserstrahl projiziert die darzustellende Information auf ein Zwischenbildschirmhologramm, das als holografische Mattscheibe dient und auf dem daher ein reelles Bild wie auf einer Mattscheibe aufgefangen und dargestellt werden kann. Der holografische Zwischenbildschirm streut das einfallende Licht in einen vordefinierten Raumwinkel. Mittels eines Displayelements wird der holografische Zwischenbildschirm mit der darauf projizierten Information so abgebildet, daß für den Betrachter ein virtuelles Bild des holografischen Zwischenbildschirms und der darauf projizierten Information entsteht.

Wenn ein reelles Bild auf einer echten Mattscheibe aufgefangen wird, wird das aufprojizierte Bild in alle Richtungen gestreut. Dies bedeutet, daß von jedem Punkt der Mattscheibe eine Kugelwelle ausgeht, die sich nach allen Richtungen ausbreitet. Daher ist das auf die Mattscheibe projizierte Bild von allen Raumrichtungen her sichtbar. Im Gegensatz dazu wirkt der holografische Zwischenbildschirm als 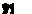 Mattscheibe mit Richtcharakteristik", was bedeutet, daß das auf den holografischen Zwischenbildschirm projizierte Licht nicht in alle Richtungen gestreut wird, sondern nur in Richtung eines vordefinierten Raumwinkels. Zwar wirkt auch bei dem holografischen Zwischenbildschirm jeder Punkt als Ausgangspunkt einer Streuwelle, die allerdings nur Richtung des vordefinierten Raumwinkels propagiert. Daher ist das auf die holografische Mattscheibe projizierte Bild nur von diesem Raumwinkel aus sichtbar.

Dies hat den Vorteil, daß die von dem Projektionslaserstrahl zur Verfügung gestellte Lichtenergie auf einen begrenzten Raumwinkelbereich konzentriert werden kann, was bei der Projektion auf eine herkömmliche Mattscheibe nicht möglich ist.

Von diesem Raumwinkel aus erscheint das auf die holografische Mattscheibe projizierte Bild daher sehr lichtstark. Dadurch kann die vom Laser zur Verfügung gestellte Lichtenergie wesentlich besser ausgenutzt werden.

Der von dem holografischen Zwischenbildschirm ausgehende Streulichtkegel wird sodann von einem Displayelement abgebildet, welches die Abbildungseigenschaften einer Lupe (Displayelement in Transmissionsgeometrie) bzw. eines Hohlspiegels (Displayelement in Reflexionsgeometrie) aufweist. Der Betrachter, der auf das Displayelement blickt, erkennt ein virtuelles Bild des holografischen Zwischenbildschirms und der darauf projizierten Information. Dies entspricht dem Fall, daß eine konventionelle Mattscheibe mit der darauf projizierten Information entweder durch eine Lupe oder durch einen Spiegel abgebildet wird.

Durch die Abbildung des Zwischenbildschirmhologramms erscheint die Projektionsebene für den Betrachter in der Ferne. Er kann deshab das Displayelement ablesen, ohne seine Augen auf den Nahbereich akkommodieren zu müssen. Durch die Richtcharakteristik des holografischen Zwischenbildschirms erscheint das virtuelle Bild des holografische Zwischenbildschirms hinreichend lichtstark und kontrastreich und kann selbst bei hellem Umgebungslicht gut ausgelesen werden. Auch ist für die Erzeugung einer zufriedenstellenden Helligkeit der Anzeige nur eine geringe Leistung des Projektionslasers erforderlich.

Gemäß einer vorteilhaften Ausgestaltung der Erfindung ist in dem holografischen Zwischenbildschirm das reelle Bild einer flächig beleuchteten Mattscheibe sowie der zugehörige Lichtkegel holografisch aufgezeichnet, wobei der Projektionslaserstrahl gleichzeitig das in dem holografischen Zwischenbildschirm aufgezeichnete reelle Bild der flächig beleuchteten Mattscheibe sowie den zugehörigen Lichtkegel rekonstruiert.

Ein derartiger Zwischenbildschirm streut das aufprojizierte Bild nur in einen bestimmten Raumwinkelbereich. Diese 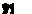 Richtcharakteristik" bei der Streuung eines auf den holografischen Zwischenbildschirm projizierten Bildes kann man sich folgendermaßen veranschaulichen: Der Zwischenbildschirm wurde aufgezeichnet, indem er innerhalb eines Lichtkegels positioniert wurde. Der Lichtkegel besteht aus den abbildenden Strahlen, die das reelle Bild einer flächig beleuchteten Mattscheibe erzeugen. Das Zwischenbildschirmhologramm wurde zusätzlich mit einem Referenzlaserstrahl beaufschlagt. Das entstehende Interferenzbild wurde aufgezeichnet.

Wird nun auf den holografischen Zwischenbildschirm mittels eines modulierten Laserstrahls ein Bild projiziert, so rekonstruiert der Projektionslaserstrahl gleichzeitig als Referenzlaserstrahl den in dem Hologramm gespeicherten Lichtkegel sowie das gespeicherte reelle Bild der beleuchteten Mattscheibe. Licht, das auf dem holografischen Zwischenbildschirm auftrifft, wird daher nur in den durch den aufgezeichneten Lichtkegel definierten Raumwinkel abgebeugt.

Damit ist eine Möglichkeit gegeben, die Streulichtintensität nur in bestimmte vordefinierte Raumwinkelbereiche zu lenken und dadurch die Streulichtintensität innerhalb des eng begrenzten Streukegels stark zu erhöhen. Der holografische Zwischenbildschirm wirkt daher als 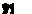 Mattscheibe mit Richtcharakteristik", was bedeutet, daß das von dem Zwischenbildschirm ausgehende Streulicht auf vordefinierte Raumwinkelbereiche konzentriert wird.

Es ist von Vorteil, als holografischen Zwischenbildschirm ein Volumenhologramm zu verwenden. Derartige Hologramme werden auch als Lippmann-Bragg-Hologramme bezeichnet. Bei ihrer Aufzeichnung wird ein hinreichend dickes holografisches Aufzeichnungsmaterial (typischerweise 5 bis 30 µm) verwendet, um auch die Tiefenstruktur des entstehenden Interferenzbildes aufzeichnen zu können. Nach Aufnahme und Entwicklung besitzt ein Volumenhologramm die Eigenschaften einer Volumengitterstruktur. Nur bei konstruktiver Interferenz der von den verschiedenen Tiefenschichten gebeugten Lichtanteile wird ein Lichtstrahl transmittiert bzw. reflektiert. Aus diesem Grund wirken derartige Volumenhologramme wellenlängen- und winkelselektiv: Nur wenn die Bragg-Bedingung für einen bestimmten Einfallswinkel und eine bestimmte Wellenlänge erfüllt ist, wird der Lichtstrahl transmittiert bzw. reflektiert. Durch die Verwendung eines Lippmann-Bragg-Hologramms als holografischer Zwischenbildschirm ist es daher möglich, Streulicht aus der Umgebung weitgehend zu unterdrücken und einen guten Kontrast zu gewährleisten.

Gemäß einer vorteilhaften Augestaltung der Erfindung wird die darzustellende Information dem Laserstrahl mittels eines Special Light Modulators (SLM) aufgeprägt. Ein derartiger Special Light Modulator besteht aus einer in den Projektionsstrahlengang eingebrachten LCD-Matrix, die als Lichtfilter wirkt und mit der dem Laserstrahl die darzustellende Information aufmoduliert werden kann. Der Vorteil bei der Verwendung eines Special Light Modulators ist, daß die Information mit gutem Kontrast dargestellt werden kann. Ein weiterer Vorteil ist die geringe Trägheit der LCD-Matrix, die eine hohe Bildwechselfrequenz und damit die Darstellung bewegter Bilder ermöglicht.

Vorteilhaft ist es, wenn durch das Laserprojektionssystem mehrere Laserstrahlen verschiedener Wellenlänge erzeugt werden. Auf diese Weise lassen sich mehrfarbige Anzeigeelemente realisieren, was insbesondere bei der Darstellung von Warnsignalen wichtig ist, um diese gegenüber der Standardinformation hervorzuheben. Bei Verwendung von 3 Lasern in den Grundfarben Rot, Gelb und Blau lassen sich echtfarbige Anzeigeelemente realisieren.

Gemäß einer weiteren Ausgestaltung der Erfindung ist das Displayelement als reflektierendes Holografisch-Optisches Element (HOE) ausgebildet. Ein derartiges reflektierendes HOE weist die Abbildungseigenschaften eines Spiegels bzw. eines Hohlspiegels auf, allerdings kann bei einem derartigen Element ― anders als bei einem konventionellen Spiegel ― ein vom Einfallswinkel verschiedener Ausfallswinkel definiert werden. Ein reflektierendes Holografisch-Optisches Element wird in Form einer Folie hergestellt, die sich problemlos in ein Armaturenbrett integrieren läßt. Eine derartige holografische Folie läßt sich auch an gekrümmte Oberflächen anpassen. Insgesamt ist bei der Verwendung eines Holografisch-Optischen Elements eine bessere Anpassung an die jeweilige Geometrie möglich.

Die Abbildungseigenschaften eines Holografisch-Optischen Elements (HOE) zeigen eine stärkere Wellenlängenabhängigkeit als die Abbildungseigenschaften von konventionellen optischen Komponenten. Allerdings sind die Farbfehler bei der Verwendung von Projektionslasern so gering, daß dies nicht störend wirkt.

Bei Verwendung eines reflektierenden Holografisch-Optischen Elements als Displayelement ist es von Vorteil, das reflektierende HOE auf seiner vom Betrachter abgewandten Seite mit einer lichtabsorbierenden Beschichtung zu versehen. Auf diese Weise können Fremdlichtreflexe wirksam unterdrückt werden, denn das in das HOE einfallende Fremdlicht wird von der lichtsbsorbierenden Beschichtung absorbiert. Das Displayelement erscheint daher bei Beleuchtung mit breitbandigem Umgebungslicht dunkel bzw. schwarz. Das virtuelle Bild des Zwischenbildschirms, das durch das reflektierende HOE erzeugt wird, wird vom Betrachter als kontrastreich und gut lesbar wahrgenommen.

Eine alternative Ausgestaltung der Erfindung sieht vor, das Displayelement als transmittierendes Holografisch-Optisches Element auszubilden. Ein derartiges Element besitzt die Abbildungseigenschaften einer Lupe. Bei dieser Lösung muß daher der holografische Zwischenbildschirm mit der darauf projizierten Information auf der dem Betrachter abgewandten Seite des Holografisch-Optischen Elements angeordnet werden. Das für den Betrachter sichtbare virtuelle Bild der dargestellten Information entsteht, indem er den Zwischenbildschirm durch das transmittierende HOE hindurch betrachtet.

Dabei ist es von Vorteil, auf der vom Betrachter abgewandten Seite des transmittierenden Holografisch-Optischen Elements eine Lichtfalle anzubringen, welche das Laserprojektionssystem umfaßt. Das transmittierende HOE wird dabei vorzugsweise an der Frontseite eines geschlossenen lichtdichten Gehäuses angebracht. Durch diese Lichtfalle, die den Projektionsstrahl dicht umschließt, wird jede Lichtstrahlung, die nicht entlang des Strahlenkegels zwischen dem Projektionssystem und dem HOE verläuft, effizient absorbiert. Dadurch ist es auch bei Verwendung eines transmittierenden Holografisch-Optischen Elements als Displayelement möglich, daß das Displayelement für den Betrachter als schwarze bzw. dunkle Fläche erscheint, wodurch die aufprojizierten Bilder kontrastreich und gut wahrnehmbar dargestellt werden können.

Es ist von Vorteil, das Displayelement als Volumenhologramm bzw. als Hologramm vom Lippmann-Bragg-Typ ausbilden. Durch die Verwendung eines dicken Hologramms, welches auch eine Speicherung der Tiefenstruktur entstehenden Interferenz ermöglicht, wird eine bessere Wellenlängen- und Winkelselektivität erzielt. Dadurch können Fremdlichtreflexe unterdrückt werden und der Anteil an Streulicht, der ins Auge des Betrachters fällt, wird reduziert. Durch diese Maßnahme erscheint im aufprojizierten Bild schwarz wirklich als schwarz, und der Kontrast wird insgesamt verbessert.

Im Einzelfall kann es Kostenvorteile bieten, das Displayelement mit konventionellen optischen Komponenten zu realisieren. Anstelle eines reflekierenden HOE kann ein Spiegel bzw. Hohlspiegel verwendet werden, und entsprechend kann auch eine Sammellinse aus Glas als transmittierendes Displayelement dienen.

Vorteilhaft ist es, wenn das jeweilige Displayelement ein vergrößertes virtuelles Bild des holografischen Bildschirms und der darauf projizierten Information erzeugt. Eine derartige Vergrößerung läßt sich sowohl bei Verwendung eines reflektierenden oder transmittierenden HOE als auch bei Verwendung konventioneller optischer Elemente (Hohlspiegel, Lupe) erreichen. Der Vorteil liegt in der besseren Erkennbarkeit und Lesbarkeit der dargestellten Information.

Vorzugsweise wird das Displayelement im Armaturenbereich eines Kraftfahrzeugs angebracht. Wichtige Daten, wie beispielsweise die Geschwindigkeit, die Drehzahl, der Benzinstand, der Kilometerstand, sowie diverse Warnsignale können bei dieser Lösung bequemer als bisher erfaßt werden. Für den Fahrer entsteht der optische Eindruck, als würde sich etwa in Höhe des Kühlergrills (oder noch weiter entfernt) eine Projektionsfläche für die benötigten Daten befinden. Dadurch, daß diese Projektionsfläche mehrere Meter entfernt vom Fahrer erscheint, kann sie von ihm abgelesen werden, ohne die Augen auf das Armaturenbrett akkommodieren zu müssen.

Eine weitere vorteilhafte Weiterbildung der Erfindung sieht vor, den Zwischenbildschirm oberhalb der Windschutzscheibe des Kraftfahrzeugs anzubringen. Bei dieser Lösung ist als Displayelement entweder ein reflektierendes Holografisch-Optisches Element oder ein Spiegel vorgesehen, welche ein virtuelles Bild des oberhalb der Windschutzscheibe angebrachten Zwischenbildschirms erzeugen. Das Projektionslasersystem kann sehr klein dimensioniert werden und deshalb ebenfalls unterhalb des Fahrzeugdaches eingebaut werden.

Zur Herstellung des holografischen Zwischenbildschirms wird folgendes Verfahren angewandt: Zunächst wird ein reelles Bild einer flächig beleuchteten Mattscheibe sowie ein zugehöriger Lichtkegel erzeugt. In diesem Lichtkegel wird das holografische Aufzeichnungsmaterial positioniert. Zusätzlich wird das holografische Aufzeichnungsmaterial mit einem Referenzlaserstrahl beaufschlagt und belichtet.

Mit Hilfe dieses erfindungsgemäßen Verfahrens kann ein Zwischenbildschirm hergestellt werden, der die holografische Aufzeichnung eines Lichtkegels sowie des reellen Bildes einer flächig beleuchteten Mattscheibe enthält. Der Lichtkegel besteht aus den abbildenden Strahlen, die das reelle Bild der flächig beleuchteten Mattscheibe erzeugen. Wenn man nach der Belichtung und Entwicklung des holografischen Zwischenbildschirms diesen wieder mit dem Referenzlaserstrahl beaufschlagt, so wird der aufgezeichnete Lichtkegel sowie das aufgezeichnete reelle Bild der Mattscheibe reproduziert. Das einfallende Licht des Referenzstrahls wird daher nur in Richtung des aufgezeichneten Lichtkegels abgebeugt. Dies bedeutet, daß bei Verwendung des holografischen Zwischenbildschirms als Projektionsfläche das einfallende Licht nicht in alle Richtungen gestreut wird, wie dies bei einer konventionellen Mattscheibe der Fall wäre, sondern in eine bestimmte Richtung gelenkt wird.

Eine vorteilhafte Ausgestaltung des Verfahrens zu Herstellung eines holografischen Zwischenbildschirms sieht vor, daß für die Belichtung des holografischen Zwischenbildschirms erforderliche reelle Bild einer flächig beleuchteten Mattscheibe sowie den zugehörigen Lichtkegel mit Hilfe eines Beleuchtungshologramms zu generieren. Dazu wird das Beleuchtungshologramm mit einem zweiten Referenzstrahl beaufschlagt, der das in dem Beleuchtungshologramm aufgezeichnete reelle Bild der flächig beleuchteten Mattscheibe und den zugehörigen Lichtkegel rekonstruiert.

Die Rekonstruktions des Beleuchtungsverlaufs mit Hilfe eines Beleuchtungshologramms stellt eine sinnvolle Alternative zur Verwendung einer Sammellinse dar, welche ebenfalls ein reelles Bild einer flächig beleuchteten Mattscheibe erzeugen kann. Um genügend Licht zu erfassen, muß die Sammellinse einen sehr großen Durchmesser aufweisen und ist dementsprechend teuer und unhandlich. Mit Hilfe des hier vorgestellten Beleuchtungshologramms kann auf die abbildende Sammellinse vollständig verzichtet werden. Die Herstellung des Zwischenbildhologramms wird daher durch das Beleuchtungshologramm vereinfacht und verbilligt. Mit dem Beleuchtungshologramm kann ein einmal aufgezeichneter Beleuchtungsverlauf immer wieder reproduziert werden. Auf diese Weise lassen sich mit Hilfe eines einzigen Beleuchtungshologramms auch höhere Stückzahlen von holografischen Zwischenbildschirmen herstellen.

Gemäß einer vorteilhaften Weiterbildung des Verfahrens zur Herstellung des holografischen Zwischenbildschirms wird der Lichtkegel bei der Aufzeichnung des Beleuchtunghologramms durch eine Blende begrenzt, die nach Größe und Lage dem später in den Strahlengang einzubringenden Aufzeichnungsmaterial für den holografischen Zwischenbildschirm entspricht.

Auf diese Weise kann sichergestellt werden, daß der durch das Beleuchtungshologramm erzeugte Lichtkegel so dimensioniert wird, daß später auf dem Aufzeichnungsmaterial für den holografischen Zwischenbildschirm der gesamte Lichtkegel aufgezeichnet werden kann.

Ein alternatives Verfahren zur Herstellung des holografischen Zwischenbildschirms mittels eines Computersystems umfaßt folgende Schrille: Zunächst wird er Strahlenverlauf des reellen Bildes einer flächig beleuchteten Mattscheibe sowie des zugehörigen Lichtkegels auf dem Computersystem simuliert. Damit kann das Interferenzbild zwischen einem Referenzstrahl und dem simulierten Strahlenverlauf berechnet werden. Mit diesem berechneten Interferenzbild wird anschließend das holografische Aufzeichnungsmaterial für den Zwischenbildschirm beschrieben.

Es ist von Vorteil, den holografischen Zwischenbildschirm direkt mittels eines Computersystems zu berechnen, weil auf diese Weise der Aufwand für optische Aufbauten komplett eingespart werden kann. Es ist weder eine teure Sammellinse noch ein Beleuchtungshologramm erforderlich, um den erfindungsgemäßen holografischen Zwischenbildschirm herzustellen.

Eine vorteilhafte Ausgestaltung des Verfahrens zur Herstellung eines holografischen Zwischenbildschirms sieht vor, den für die Belichtung des holografischen Zwischenbildschirms erforderliche reelle Bild einer flächig beleuchteten Mattscheibe sowie den zugehörigen Lichtkegel mit Hilfe eines Beleuchtungshologramms zu generieren. Dazu wird das Beleuchtungshologramm mit einem zweiten Referenzstrahl beaufschlagt, der das im Beleuchtungshologramm aufgezeichnete reelle Bild der flächig beleuchteten Mattscheibe und den zugehörigen Lichtkegel rekonstruiert.

Auf diese Weise wird die Herstellung von holografischen Zwischenbildschirmen vereinfacht, weil der dafür notwendige Beleuchtungsverlauf mit Hilfe eines einmal hergestellten Beleuchtungshologramms immer wieder reproduziert werden kann. Auf diese Weise lassen sich mit Hilfe eines einzigen Beleuchtungshologramms auch höhere Stückzahlen von holografischen Zwischenbildschirmen herstellen.

Weitere Einzelheiten und Vorteile der Erfindung werden nachfolgend anhand mehrerer in den Zeichnungen dargestellter Ausführungsbeispiele erläutert.

Es zeigen:
- Figur 1: das Funktionsprinzip des holografischen Display-Systems,
- Figur 2: die Aufnahmeanordnung für den holografischen Zwischenbildschirm, wobei der Zwischenbildschirm für die Verwendung in Transmissionsgeometrie vorgesehen ist,
- Figur 3: die Projektion der darzustellenden Information auf den holografischen Zwischenbildschirm,
- Figur 4: die Aufnahmeanordnung für das Beleuchtungshologramm,
- Figur 5: die Aufnahmeanordnung für den holografischen Zwischenbildschirm bei Verwendung eines Beleuchtungshologramms, und
- Figur 6: die Aufnahmeanordnung für das Display-HOE.

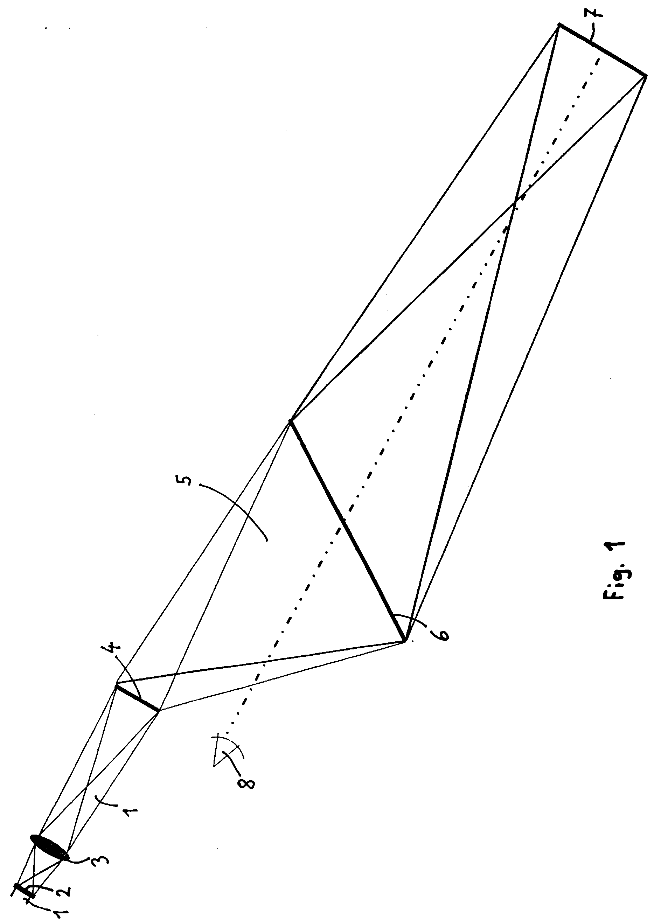

In Figur 1 ist das gesamte holografische Display-System im Überblick dargestellt. Dem Laserstrahl 1 wird durch den Special Light Modulator 2 die darzustellende Information als Amplitudenmodulation aufgeprägt. Der Special Light Modulator (SLM) kann beispielsweise eine LCD-Matrix sein. Mittels des Objektivs 3 wird der Laserstrahl mit der aufgeprägten Information auf den als Mattscheibe wirkenden holografischen Zwischenbildschirm 4 projiziert. Der Projektionslaserstrahl 1 dient gleichzeitig als Referenzlaserstrahl, der den in dem holografischen Zwischenbildschirm gespeicherten Lichtkegel 5 rekonstruiert. Dadurch ist es ― anders als bei einer konventionellen Mattscheibe ― möglich, das auf die Projektionsfläche 4 einfallende Licht lediglich in den Raumwinkelbereich 5 (und nicht nach allen Seiten hin) abzustrahlen. Dadurch ergibt sich eine höhere Lichtintensität im Raumwinkelbereich 5.

Das Displayelement 6 ist innerhalb des von dem Zwischenbildschirm 4 erzeugten Beugungskegels 5 angebracht. In dem in Figur 1 dargestellten Fall ist das Displayelement 6 als reflektierendes Holografisch-Optisches Element (HOE) ausgeführt. Das HOE 6 hat die Abbildungseigenschaften eines vergrößernden Hohlspiegels, wobei aber bei einem HOE der Einfallswinkel nicht gleich dem Ausfallswinkel zu sein braucht. Durch das Holografisch-Optische Element 6 wird ein vergrößertes virtuelles Bild 7 des holografischen Zwischenbildschirms 4 sowie der darauf projizierten Information erzeugt. Dieses virtuelle Bild kann von dem Beobachter 8, der das Displayelement 6 betrachtet, erfaßt werden. Die Ebene des virtuellen Bildes 7 erscheint dabei wesentlich weiter entfernt vom Betrachter als das Displayelement 6. Der Beobachter 8 muß daher seine Augen nicht auf das Displayelement 6, und damit auf den Nahbereich, akkommodieren.

Typischerweise findet das erfindungsgemäße holografische Display-System im Armaturenbereich eines Kraftfahrzeugs, eines Flugzeugs etc. Anwendung. Dazu wird das Displayelement 6 in das Armaturenbrett integriert, während der holografische Zwischenbildschirm 4 sowie die Laserprojektionseinheit oberhalb des Beobachters angebracht sind. Bei einem Kraftfahrzeug könnte der holografische Zwischenbildschirm 4 oberhalb der Windschutzscheibe, etwa im Bereich der Sonnenblenden, angeordnet werden.

In der in Figur 1 gezeichneten Ausführungsform ist der holografische Zwischenbildschirm 4 als Transmissionshologramm ausgeführt. Es wäre stattdessen möglich, als Zwischenbildschirm ein Reflexionshologramm zu verwenden, das dann entsprechend von der Seite des Displayelements 6 her mit dem Projektionslaserstrahl beaufschlagt werden müßte.

Entsprechend ist es möglich, das Displayelement 6 nicht als reflektierendes HOE, sondern als transmittierendes HOE auszubilden. In diesem Fall müßten der holografische Zwischenbildschirm sowie das Laserprojektionssystem auf der dem Beobachter 8 abgewandten Seite des Displayelements 6 angeordnet werden. Das transmittierende HOE würde dann die Abbildungseigenschaften einer Lupe besitzen und ein vergrößertes virtuelles Bild des holografischen Zwischenbildschirms liefern. Es bestehen also einige Freiheitsgrade bei der geometrischen Anordnung des erfindungsgemäßen holografischen Display-Systems. Wichtig ist dabei außerdem, daß im Fall eines reflektierenden Holografisch-Optischen Elements als Displayelement 6 Einfallswinkel und Ausfallswinkel nicht übereinstimmen müssen, weshalb das HOE beliebig verkippt zum Einfallswinkel angeordnet werden kann. Dies ist allerdings bei Verwendung eines Spiegels bzw. eines Hohlspiegels nicht möglich.

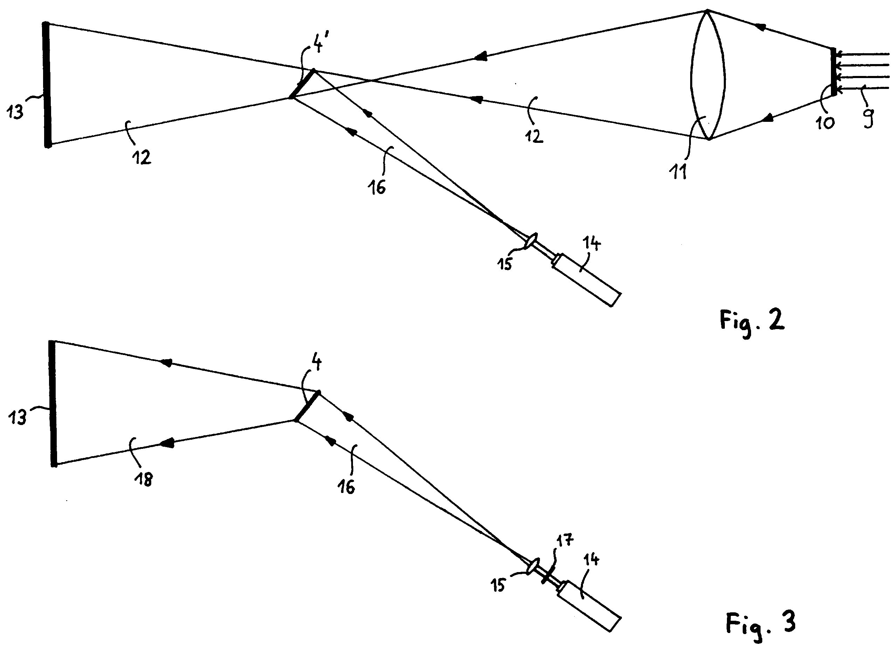

In Figur 2 ist die Aufnahmeanordnung zur Aufzeichnung des holografischen Zwischenbildschirms dargestellt, und zwar für den Fall, daß der holografische Zwischenbildschirm 4 in Transmissionsgeometrie verwendet werden soll. Auf dem holografischen Zwischenbildschirm 4 soll das reelle Bild 13 einer beleuchteten Mattscheibe 10 sowie der zugehörige Lichtkegel 12 holografisch aufgezeichnet werden. Dazu wird folgende Beleuchtungsanordnung realisiert: Eine Mattscheibe 10 wird von einem aufgeweiteten Laserstrahl 9 flächig beleuchtet. Mittels einer großen Sammellinse 11 wird ein reelles Bild 13 der beleuchteten Mattscheibe 10 erzeugt. Die Lichtintensität ist dabei auf den Lichtkegel 12 begrenzt.

Das zu belichtende holografische Aufzeichnungsmaterial 4' für den Zwischenbildschirm wird innerhalb des Lichtkegels 12 so positioniert, daß es von dem Lichtkegel durchstrahlt wird. Der Strahl des Lasers 14 wird durch die Linse 15 so aufgeweitet, daß der gesamte holografische Film 4' gleichmäßig durch den Referenzlaserstrahl 13 beaufschlagt wird. Dabei entsteht ein Interferenzbild zwischen den Lichtstrahlen des Lichtkegels 12 und dem Referenzlaserstrahl 16. Bei der Belichtung des holografischen Materials 4' wird dieses Interferenzbild aufgezeichnet.

In Figur 3 ist dargestellt, wie das entwickelte Zwischenbildschirmhologramm 4 durch einen Referenzlaserstrahl 16 beaufschlagt wird, der dem für die Aufzeichnung verwendeten Referenzlaserstrahl entspricht. Wie in Figur 2 wird dazu der vom Laser 14 erzeugte Strahl durch eine Linse 15 so aufgeweitet, daß das gesamte Zwischenbildschirmhologramm 4 beaufschlagt werden kann. Da der holografische Zwischenbildschirm 4 ein Transmissionshologramm darstellt, rekonstruiert der einfallende Referenzstrahl 16 das aufgezeichnete reelle Bild 13 der beleuchteten Mattscheibe 10 sowie den zugehörigen Lichtkegel 18. Die Lichtintensität in dem einfallenden Referenzlaserstrahl 16 wird ausschließlich in den Raumwinkelbereich 18 abgebeugt.

Wenn nun in den vom Laser 14 erzeugten Strahl ein Special Light Modulator 17 eingebracht wird, so kann dem Referenzstrahl 16 eine Information aufgeprägt werden, welche auf den Zwischenbildschirm 4 projiziert wird. Das Zwischenbildschirmhologramm 4 wirkt dabei als Mattscheibe, auf der die projizierte Information sichtbar wird. Im Unterschied zu einer regulären Mattscheibe gelangt das von dem holografischen Zwischenbildschirm 4 ausgehende Streulicht allerdings lediglich in den Raumwinkelbereich 18. Von Punkten außerhalb dieses Raumwinkelbereichs kann die auf den Zwischenbildschirm 4 projizierte Information nicht wahrgenommen werden. Dies bedeutet, daß es sich bei dem holografischen Zwischenbildschirm 4 um eine Mattscheibe mit inhärenter 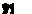 Richtcharakteristik" handelt. Da das einfallende Licht nur in den Raumwinkelbereich 18 gestreut wird, ist die Lichtintensität innerhalb des Raumwinkelbereichs 18 sehr viel größer, als wenn man anstelle des holografischen Zwischenbildschirms 4 eine konventionelle Mattscheibe verwenden würde.

Anhand von Figur 2 war gezeigt worden, wie ein holografischer Zwischenbildschirm hergestellt werden kann. Dazu war eine Sammellinse 11 erforderlich, die bei der dargestellten Geometrie einen relativ großen Durchmesser aufweisen muß. Um diese Linse 11 überflüssig zu machen und dadurch die Herstellung des Zwischenbildschirmhologramms zu vereinfachen, kann ein sogenanntes Beleuchtungshologramm verwendet werden. In dem Beleuchtungshologramm ist der zur Belichtung des Zwischenbildschirmhologramms erforderliche Beleuchtungsverlauf aufgezeichnet. Das Beleuchtungshologramm stellt also ein Hilfsmittel zur Aufzeichnung des holografischen Zwischenbildschirms dar.

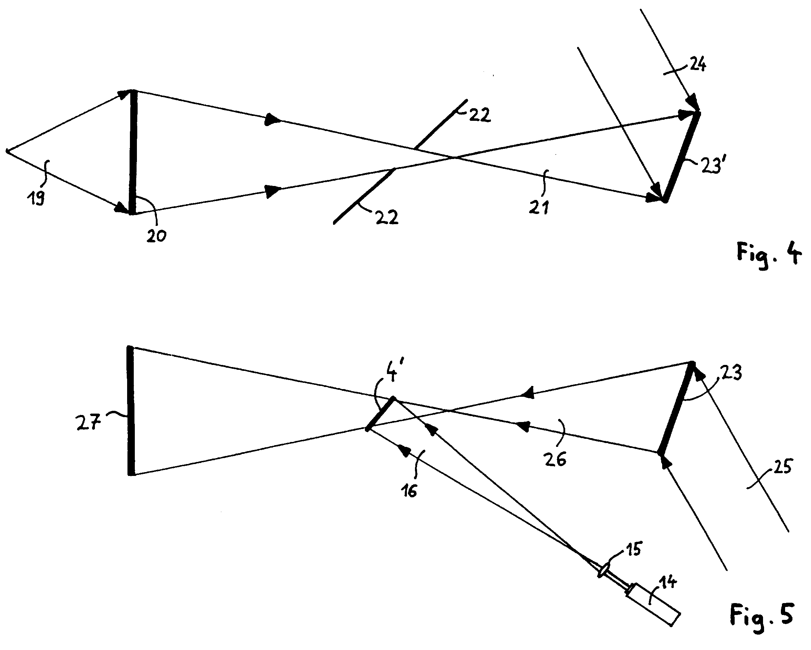

Die Methode zur Herstellung eines derartigen Beleuchtungshologramms ist in Figur 4 gezeigt. Dabei wird eine Mattscheibe 20 durch einen aufgeweiteten Laserstrahl 19 beleuchtet. Von der beleuchteten Mattscheibe 20 gehen Kugelwellen in alle Richtungen aus, die Mattscheibe streut das auftreffende Laserlicht diffus in alle Richtungen. Durch die Blende 22 wird ein Lichtkegel 21 definiert. Die Blende 22 ist dabei so gewählt, daß ihre Öffnung der späteren Position des holografischen Aufzeichnungsmaterials 4' für den Zwischenbildschirm entspricht.

Der holografische Film 23' für das Beleuchtungshologramm wird zum einen von dem Lichtkegel 21 beaufschlagt, zum anderen von einer parallel einfallenden kohärenten Referenzwelle 24. Das Interferenzbild des Lichtkegels 21 und der Referenzwelle 24 wird auf dem holografischen Film 23' aufgezeichnet. Dadurch wird erreicht, daß sowohl die beleuchtete Mattscheibe 20 als auch der von dieser ausgehende Lichtkegel 21 in dem Beleuchtungshologramm gespeichert sind.

Mit Hilfe dieses Beleuchtungshologramms läßt sich nun auf vereinfachte Weise die Belichtung des holografischen Zwischenbildschirms durchführen. Dies ist insbesondere dann von Vorteil, wenn größere Stückzahlen des holografischen Zwischenbildschirms hergestellt werden müssen.

In Figur 5 ist die Aufnahmeanordnung zur Belichtung des Aufzeichnungsmaterials 4' für einen holografischen Zwischenbildschirms unter Verwendung eines Beleuchtungshologramms 23 für den Fall dargestellt, daß der holografische Zwischenbildschirm in Transmissionsgeometrie verwendet werden soll. Das Beleuchtungshologramm 23 wird mit einem Referenzlaserstrahl 25 beaufschlagt, welcher der konjugierte Strahl zu dem bei der Aufzeichnung verwendeten Referenzstrahl 24 ist. Dies bedeutet, daß der Referenzstrahl 25 genau gegenläufig zu dem bei der Aufzeichnung verwendeten Referenzstrahl 24 auf das Beleuchtungshologramm 23 einfällt. Dadurch wird die aufgezeichnete beleuchtete Mattscheibe 20 nicht als virtuelles Bild, sondern als reelles Bild 27 rekonstruiert. Außerdem wird der zugehörige Lichtkegel 26 rekonstruiert. In dem so erzeugten Lichtkegel 26 wird das zu belichtende holografische Material 4' für den Zwischenbildschirm so positioniert, daß seine Lage exakt der Lage der Blendenöffnung der Blende 22 entspricht. Der holografische Film 4' wird außerdem von dem Referenzlaserstrahl 16 beaufschlagt. Dazu wird der Strahl des Lasers 14 mittels der Linse 15 so aufgeweitet, daß der holografische Film 4' gleichmäßig ausgeleuchtet wird.

Beim Vergleich der Aufnahmeanordnungen von Figur 2 und Figur 5 ist erkennbar, daß in beiden Fällen ein reelles Bild einer beleuchteten Mattscheibe sowie der zugehörige Lichtkegel auf dem holografischen Film 4' für den Zwischenbildschirm aufgezeichnet werden. In Figur 5 sind aber die beleuchtete Mattscheibe 10 sowie die abbildende Linse 11 durch das Beleuchtungshologramm 23 ersetzt.

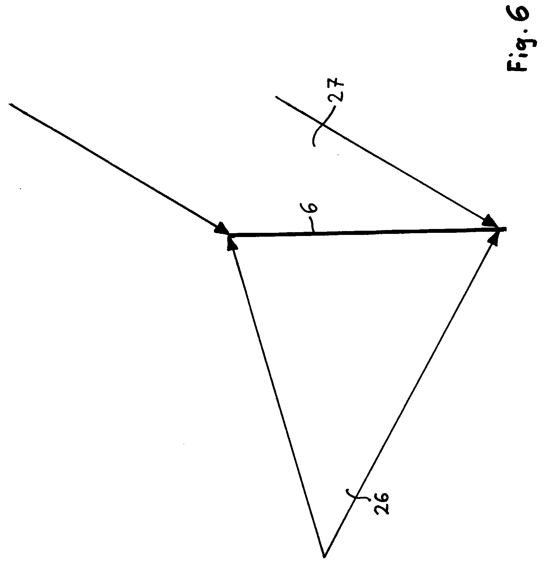

In Figur 6 ist dargestellt, auf welche Weise ein Display-HOE 6 hergestellt werden kann. Es soll ein reflektierendes HOE aufgenommen werden, welches ein vergrößertes virtuelles Bild des Zwischenbildschirms 4 erzeugt. Die Abbildungseigenschaften des reflektierenden HOE sollen daher denen eines Hohlspiegels entsprechen, wobei aber bei einem HOE die Lage von Einfallswinkel und Ausfallswinkel frei definiert werden kann. Zur Belichtung dieses Reflexions-HOE 6 wird dieses von der einen Seite von einem divergenten Laserstrahlenbündel 26 beaufschlagt, während der Referenzlaserstrahl 27 von der anderen Seite her auf den zu belichtenden holografischen Film einfällt. Das Interferenzbild, das von der divergenten Lichtwelle 26 und der ebenen Welle 27 erzeugt wird, wird als Reflexions-HOE 6 aufgezeichnet und kann dann als reflektierendes Displayelement in einem holografischen Display-System verwendet werden.

## Patentansprüche

1. Holografisches Display-System zur Darstellung von Information, welches aufweist:
einen holografischen Zwischenbildschirm, der als holografische Mattscheibe verwendbar ist und auf dem ein reelles Bild darstellbar ist,
ein Laserprojektionssystem, durch das mindestens ein Laserstrahl erzeugbar ist, dem die darzustellende Information aufgeprägt ist, wobei der erzeugte Laserstrahl die darzustellende Information auf den holografischen Zwischenbildschirm projiziert, und wobei der holografische Zwischenbildschirm das einfallende Licht in einen vordefinierten Raumwinkel streut, sowie
ein Displayelement, das den holografischen Zwischenbildschirm mit der darauf projizierten Information so abbildet, daß für den Betrachter ein virtuelles Bild des holografischen Zwischenbildschirms und der darauf projizierten Information entsteht.

2. Holografisches Display-System gemäß Anspruch 1, dadurch gekennzeichnet,
daß in dem holografischen Zwischenbildschirm das reelle Bild einer flächig beleuchteten Mattscheibe sowie der zugehörige Lichtkegel holografisch aufgezeichnet sind,
wobei der Laserstrahl, der die darzustellende Information auf den holografischen Zwischenbildschirm projiziert, gleichzeitig das in dem holografischen Zwischenbildschirm aufgezeichnete reelle Bild der flächig beleuchteten Mattscheibe sowie den zugehörigen Lichtkegel rekonstruiert.

3. Holografisches Display-System nach Anspruch 1 oder 2, dadurch gekennzeichnet, daß der holografische Zwischenbildschirm ein Volumenhologramm ist.

4. Holografisches Display-System nach einem der Ansprüche 1 bis 3, dadurch gekennzeichnet, daß die darzustellende Information dem Laserstrahl mittels eines Special Light Modulators (SLM) aufprägbar ist.

5. Holografisches Display-System nach einem der Ansprüche 1 bis 4, dadurch gekennzeichnet, daß durch das Laserprojektionssystem mehrere Laserstrahlen erzeugbar sind, wobei die verschiedenen Laserstrahlen unterschiedliche Wellenlängen aufweisen.

6. Holografisches Display-System nach einem der Ansprüche 1 bis 5, dadurch gekennzeichnet, daß das Displayelement ein reflektierendes Holografisch-Optisches Element (HOE) ist.

7. Holografisches Display-System nach Anspruch 6, dadurch gekennzeichnet, daß das reflektierende Holografisch-Optische Element auf seiner vom Betrachter abgewandten Seite mit einer lichtabsorbierenden Beschichtung versehen ist.

8. Holografisches Display-System nach einem der Ansprüche 1 bis 5, dadurch gekennzeichnet, daß das Displayelement ein transmittierendes Holografisch-Optisches Element (HOE) ist.

9. Holografisches Display-System nach Anspruch 8, dadurch gekennzeichnet, daß auf der vom Betrachter abgewandten Seite des transmittierenden Holografisch-Optischen Elements eine Lichtfalle angebracht ist, welche das Laserprojektionssystem umfaßt.

10. Holografisches Display-System nach einem der Ansprüche 6 bis 9, dadurch gekennzeichnet, daß das Displayelement ein Volumenhologramm ist.

11. Holografisches Display-System nach einem der Ansprüche 1 bis 5, dadurch gekennzeichnet, daß das Displayelement ein Spiegel ist.

12. Holografisches Display-System nach einem der Ansprüche 1 bis 5, dadurch gekennzeichnet, daß das Displayelement eine Lupe ist.

13. Holografisches Display-System nach einem der Ansprüche 1 bis 12, dadurch gekennzeichnet, daß durch das Displayelement ein vergrößertes virtuelles Bild des holografischen Zwischenbildschirms und der darauf projizierten Information erzeugbar ist.

14. Holografisches Display-System nach einem der Ansprüche 1 bis 13, dadurch gekennzeichnet, daß das Displayelement im Armaturenbereich eines Kraftfahrzeugs angebracht ist.

15. Holografisches Display-System nach einem der Ansprüche 1 bis 14, dadurch gekennzeichnet, daß der holografische Zwischenbildschirm oberhalb der Windschutzscheibe eines Kraftfahrzeugs angebracht ist.

16. Verfahren zur Darstellung von Information mittels eines holografischen Display-Systems, wobei das Verfahren folgende Schritte aufweist:
a) Aufprägen der darzustellenden Information auf einen Laserstrahl,
b) Projizieren der aufgeprägten Information auf einen holografischen Zwischenbildschirm durch den Laserstrahl, wobei der holografische Zwischenbildschirm als holografische Mattscheibe verwendet wird, und wobei der holografische Zwischenbildschirm das einfallende Licht in einen vordefinierten Raumwinkel streut,
c) Abbilden des holografischen Zwischenbildschirms und der darauf projizierten Information mittels eines Displayelements, wobei für den Betrachter ein virtuelles Bild des holografischen Zwischenbildschirms und der darauf projizierten Information entsteht.

17. Verfahren zur Darstellung von Information nach Anspruch 16, dadurch gekennzeichnet, daß der Laserstrahl, der die aufgeprägte Information auf den holografischen Zwischenbildschirm projiziert, zugleich ein im holografischen Zwischenbildschirm aufgezeichnetes reelles Bild einer flächig beleuchteten Mattscheibe sowie den zugehörigen Lichtkegel rekonstruiert.

18. Verfahren zur Darstellung von Information nach Anspruch 16 oder 17, dadurch gekennzeichnet, daß der holografische Zwischenbildschirm ein Volumenhologramm ist.

19. Verfahren zur Darstellung von Information nach Anspruch 16 bis 18, dadurch gekennzeichnet, daß die darzustellende Information dem Laserstrahl mittels eines Special Light Modulators (SLM) aufgeprägt wird.

20. Verfahren zur Darstellung von Information nach einem der Ansprüche 16 bis 19, dadurch gekennzeichnet, daß durch das Laserprojektionssystem mehrere Laserstrahlen erzeugt werden, wobei die verschiedenen Laserstrahlen unterschiedliche Wellenlängen aufweisen.

21. Verfahren zur Darstellung von Information nach einem der Ansprüche 16 bis 20, dadurch gekennzeichnet, daß als Displayelement ein reflektierendes Holografisch-Optisches Element (HOE) verwendet wird.

22. Verfahren zur Darstellung von Information nach Anspruch 21, dadurch gekennzeichnet, daß das reflektierende Holografisch-Optische Element auf seiner vom Betrachter abgewandten Seite mit einer lichtabsorbierenden Beschichtung versehen ist.

23. Verfahren zur Darstellung von Information nach einem der Ansprüche 16 bis 20, dadurch gekennzeichnet, daß als Displayelement ein transmittierendes Holografisch-Optisches Element (HOE) verwendet wird.

24. Verfahren zur Darstellung von Information nach einem der Ansprüche 16 bis 20, dadurch gekennzeichnet, daß auf der vom Betrachter abgewandten Seite des transmittierenden Holografisch-Optischen Elements eine Lichtfalle angebracht ist, welche das Laserprojektionssystem umfaßt.

25. Verfahren zur Darstellung von Information nach einem der Ansprüche 21 bis 24, dadurch gekennzeichnet, daß das Displayelement ein Volumenhologramm ist.

26. Verfahren zur Darstellung von Information nach einem der Ansprüche 16 bis 20, dadurch gekennzeichnet, daß als Displayelement ein Spiegel verwendet wird.

27. Verfahren zur Darstellung von Information nach einem der Ansprüche 16 bis 20, dadurch gekennzeichnet, daß als Displayelement eine Lupe verwendet wird.

28. Verfahren zur Darstellung von Information nach einem der Ansprüche 16 bis 27, dadurch gekennzeichnet, daß das Displayelement ein vergrößertes virtuelles Bild des holografischen Zwischenbildschirms und der darauf projizierten Information erzeugt.

29. Verfahren zur Darstellung von Information nach einem der Ansprüche 16 bis 28, dadurch gekennzeichnet, daß das Displayelement im Armaturenbereich des Kraftfahrzeugs angebracht ist.

30. Verfahren zur Darstellung von Information nach einem der Ansprüche 16 bis 29, dadurch gekennzeichnet, daß der holografische Zwischenbildschirm oberhalb der Windschutzscheibe eines Kraftfahrzeugs angebracht ist.

31. Verfahren zur Herstellung eines holografischen Zwischenbildschirms, gekennzeichnet durch folgende Schritte:
a) Erzeugen eines reellen Bildes einer flächig beleuchteten Mattscheibe sowie eines zugehörigen Lichtkegels,
b) Positionieren des holografischen Aufzeichnungsmaterials in dem Lichtkegel,
c) Beaufschlagen des holografischen Aufzeichnungsmaterials mit einem Referenzlaserstrahl,
d) Belichten des holografischen Aufzeichnungsmaterials.

32. Verfahren zur Herstellung eines holografischen Zwischenbildschirms nach Anspruch 31, dadurch gekennzeichnet, daß das reelle Bild der flächig beleuchteten Mattscheibe und der zugehörige Lichtkegel erzeugt werden, indem ein Beleuchtungshologramm mit einem zweiten Referenzstrahl beaufschlagt wird, der das in dem Beleuchtungshologramm aufgezeichnete reelle Bild der flächig beleuchteten Mattscheibe und den zugehörigen Lichtkegel rekonstruiert.

33. Verfahren zur Herstellung eines holografischen Zwischenbildschirms nach Anspruch 31 oder 32, dadurch gekennzeichnet, daß bei der Aufzeichnung des Beleuchtungshologramms der Lichtkegel durch eine Blende begrenzt wird, die nach Größe und Lage dem später in den Strahlengang einzubringenden Aufzeichnungsmaterial für den holografischen Zwischenbildschirm entspricht.

34. Verfahren zur Herstellung eines holografischen Zwischenbildschirms mittels eines Computersystems, gekennzeichnet durch folgende Schritte:
a) Simulieren des Strahlenverlaufs des reellen Bildes einer flächig beleuchteten Mattscheibe sowie des zugehörigen Lichtkegels,
b) Berechnen des Interferenzbildes zwischen einem Referenzstrahl und dem gemäß Schritt a) erzeugten Strahlenverlauf,
c) Beschreiben des holografischen Aufzeichnungsmaterials mit dem berechneten Interferenzbild.
